# EUROPEAN PATENT APPLICATION

(11) **EP 3 486 887 A1**
(43) Date of publication of application: **22.05.2019**
(21) Application number: 18206361.0
(22) Date of filing: 14.11.2018
(51) Int. Cl.: G08G 5/00, H04B 7/185, H04W 4/02, G01C 23/00

(54) **VIRTUALIZED NAVIGATION AND COMMUNICATION RADIOS**

(30) Priority: 20.11.2017 US 201715817836
(71) Applicant: Honeywell International Inc., Morris Plains, NJ New Jersey 07950 (US)
(72) Inventor: ESPOSITO, Carl, Morris Plains, NJ 07950 (US)
(74) Representative: Houghton, Mark Phillip

(57) **Abstract**

A method for virtual navigation and communication radios in a vehicle is provided. The method includes receiving a request for a selected radio function, determining a position of a vehicle, determining the data to provide for the selected radio function based on the vehicle position, receiving or generating the data for the selected radio function, and providing the received or generated data over an interface associated with the navigation or communication radio.

## Description

### BACKGROUND

Many navigation aids have been developed to enable aircraft to navigate from an origin airport to a destination airport on a given flight plan. Each of these conventional systems use radio technology to enable the aircraft to determine its position and trajectory. And, thus enable the aircraft to navigate along its intended flight path.

These radio functions tune and listen to ground-based radio stations to provide navigation information to the pilot and crew of the aircraft. For example, Distance Measuring Equipment (DME) is an example of a radio-based navigation aid. DME is a transponder-based radio navigation technology that measures slant range distance by timing the propagation delay of L-Band radio signals. Aircraft use DME to determine their distance from a land-based transponder by sending and receiving pulse pairs from a DME radio - two pulses of fixed duration and separation.

Marker Beacon (MB) is a particular type of VHF radio beacon used in aviation, usually in conjunction with an instrument landing system (ILS), to give pilots a means to determine position along an established route to a destination such as a runway.

An automatic direction finder (ADF) is a marine or aircraft radio-navigation instrument that automatically and continuously displays the relative bearing from the ship or aircraft to a suitable radio station. ADF receivers are normally tuned to aviation or marine NDBs operating in the LW band between 190 - 535 kHz. Most ADF receivers can also receive medium wave (AM) broadcast stations, though these are less reliable for navigational purposes.

VHF Omni-Range (VOR) is a type of short-range radio navigation system for aircraft, enabling aircraft with a receiving unit to determine their position and stay on course by receiving radio signals transmitted by a network of fixed ground radio beacons.

Due to the plethora of radio systems in use today, modern ships and aircraft include a large number of radios (and associated antennas) to enable operation with the various platforms. Each radio takes up valuable space and adds weight to the equipment onboard the aircraft.

Therefore, there is a need in the art to reduce the required radio equipment (and associated antennas and cables) on board a vehicle while still enabling the crew to obtain the necessary navigation information to safely navigate their vehicle, e.g., an aircraft, through a planned route to a destination. Additionally, aeronautical navigation and procedures continue to use these radio sources for position reporting, cockpit indications and aircraft operation.

### SUMMARY

In one embodiment, a method for virtual navigation and communication radios in a vehicle is provided. The method includes receiving a request for a selected radio function, determining a position of a vehicle, determining the data to provide for the selected radio function based on the vehicle position, receiving or generating the data for the selected radio function, and providing the received or generated data over an interface associated with the navigation or communication radio.

### BRIEF DESCRIPTION OF THE DRAWINGS

Embodiments of the present invention can be more easily understood and further advantages and uses thereof more readily apparent, when considered in view of the description of the preferred embodiments and the following figures in which:
Fig. 1 is a block diagram of a virtualized navigation and communication radio according to one embodiment of the present invention.
Fig. 2 is a flow chart of a method for operation of a virtualized navigation and communication radio according to one embodiment of the present invention.
Fig. 3 is a block diagram of one embodiment of a communication system for a vehicle with a virtualized navigation and communication radio according to one embodiment of the present invention.

### DETAILED DESCRIPTION

In the following detailed description, reference is made to the accompanying drawings that form a part hereof, and in which is shown by way of specific illustrative embodiments in which the invention may be practiced. These embodiments are described in sufficient detail to enable those skilled in the art to practice the invention, and it is to be understood that other embodiments may be utilized and that logical, mechanical and electrical changes may be made without departing from the scope of the present invention. The following detailed description is, therefore, not to be taken in a limiting sense.

Embodiments of the present invention provide a system solution to synthesize and virtualize traditionally hardware based radios such as aeronautical radios. This approach enables functionality of legacy ground-based radio navigation aides to be provided to a pilot through a familiar interface while using a combination of virtual and/or streaming information, to implement the legacy radio functions. Embodiments of the present invention use on-board systems comprising processors, data bases, communication and potentially ground-based compliment/data sources to simulate legacy radios such as Distance Measuring Equipment (DME), Marker Beacon (MB), Automatic Direction Finder (ADF), VHF Omni-Range (VOR) with additional audio streaming options for VHF Communication or HF Communication radios. Other conventional navigation and communication radio functions can also be implemented in this virtual radio environment. Additionally, non-collocated radios could be virtually tuned and listened to, for example a destination airport's control tower or airport information recording could be remotely tuned by the aircraft and virtually streamed to the aircraft, increasing safety and crew preparedness.

Advantageously, embodiments of this solution dramatically reduce cost, weight and installation issues compared with putting traditional hardware based radios (and associated antennas and cables) into a vehicle, such as an aircraft, through virtualizing the radio functions and using aircraft equipment, processing, databases, streaming IP and cloud based information to present simulated radio functions to the vehicle operator.

The traditional hardware-based radio functions of DME, MB, ADF and VOR tune and listen to ground based radio stations. By using a combination of GPS (including multi-constellation GNSS), Inertial Reference or other position sources , audio/tone generation and on-board databases containing locations of the DME, MB, ADF and VOR stations, the resultant function of these radios can be virtualized for the pilot and aircraft systems. Tuning, audio idents and navigation data provided by the radios can be virtualized and simulated. In some embodiments, this is extended to audio communication radios (or the audio potion of the navigation radios) such as VHF/HF Communications by streaming audio communications through IP based SATCOM (or ground based IP) systems to virtualize the audio portion of these radios, in similar fashion.

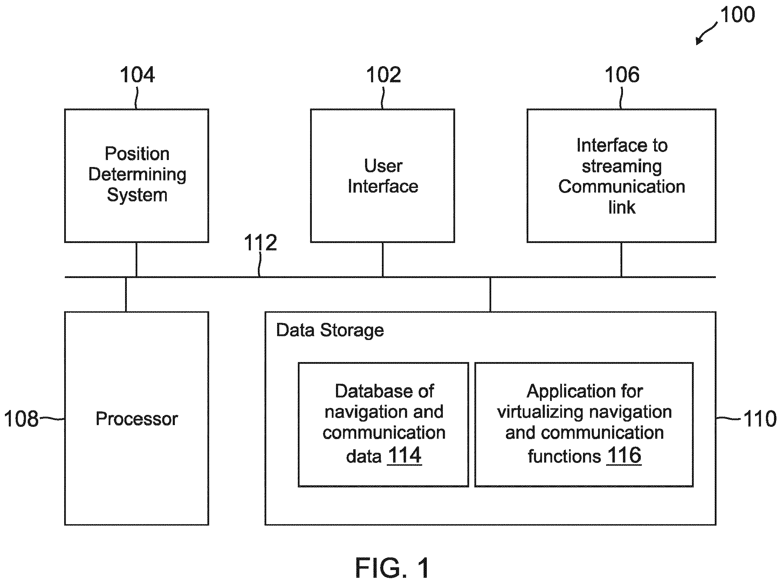

Fig. 1 is a block diagram of a virtualized navigation and communication radio, indicated generally at 100, according to one embodiment of the present invention. Radio 100 includes a user interface 102. User interface 102 provides a look and feel of one or more conventional radios used in a vehicle such as in the cockpit of an aircraft. For example, in one embodiment, the user interface comprises one or more of an interface for a Distance Measuring Equipment (DME), a Marker Beacon (MB), an automatic Direction Finder (ADF), and a VHF Omni-Range (VOR) radio. In some embodiments, user interface 102 also includes a conventional interface for one or more communication radios, e.g., very high frequency (VHF) and/or High Frequency (HF) radios. This interface enables providing input to the radio function as well as receiving output (audio and visual) from the virtualized radio function.

Radio 100 virtualizes the various radio functions, in part, by determining the position of the vehicle and synthesizing the function of the radio using the determined position. With the position information, radio 100 is able to draw on information in an on-board database and an application program to provide the specific radio functionality requested through the interface 102. The position of the vehicle is determined by position determining system 104. In one embodiment, position determining system 104 comprises a Global Positioning System (GPS) receiver, a Global Navigation Satellite System (GNSS) receiver, or an inertial reference system.

For most functions, GPS accuracy or temporary loss would not result in loss of VHF communications. In the event of GPS loss, the Inertial Reference System would be able to supply position information. Further, one advantage of the virtualized radio is that the virtualized radio 100 may reduce the duplicative number of radios on an aircraft. For example, an aircraft may have one VOR radio rather than two VOR radios. Additionally, incorporation of virtual radio 100 on an aircraft may also enable elimination of seldom used radios like the ADF radio.

Radio 100 includes data storage 110 that stores data and an application used by processor 108 to implement the virtualized navigation and communication radio functions. Data storage 110 comprises a non-transitory storage medium such as flash memory or other non-volatile memory, magnetic disc drives, and/or optical disc drives). Data storage 110 includes database 114 that includes navigation and communication data. For example, for communication functions, data base 114 includes information used to establish a connection with an air traffic control center associated a location of an aircraft. For functions such as MB, VOR, ADF, and DME, database 114 includes information such as the location of the associated transponders used by conventional radios to determine position along a route, and/or distance or trajectory to a destination or waypoint. Other information such as an identifier for the transponder or the like is also included in database 114. In addition, data store 110 includes application program 116 that is operable, when executed on processor 108, to virtualize navigation and communication functions that are normally performed by conventional RF radios as discussed in more detail below. Processor 108 comprises a programmable processor that executes program instructions (for example, software or firmware). The various components of radio 100 are interconnected over bus 112.

Radio 100 uses a streaming communication service to synthesize various aspects of the conventional radio functionality. To this end, radio 100 includes an interface 106 to a streaming communication link. Interface 106 provides, in one embodiment, an interface to a satellite communication link.

In operation, in one embodiment, a user selects a radio function, e.g., the ADF function, via interface 102. Radio 100 executes application 116 and looks up the nondirectional beacon (NDB) associated with the destination. Further, the application 116 looks up the Morse code identifier for the NDB in database 114 and generates and plays that signal over the user interface 102 for the user to verify that it is the correct NDB. The application 116 further uses the current position of the aircraft and the location of the NDB to determine the bearing of the aircraft. This bearing is displayed to the user at the user interface 102. As with a conventional ADF, the application 116 continuously updates the bearing that is displayed on the user interface 102.

In the communications context, a user selects a VHF of HF communication function at user interface 102 by tuning to a particular frequency for air traffic control. Application 116 looks up in database 114, based on the current position, information used to instigate a streaming connection via interface 106 with the air traffic control center. Communication signals from the user are sent by application 116 over interface 106, e.g., a satellite communication link. Additionally, communication signals received from the air traffic control center are provided to the user over the user interface 102.

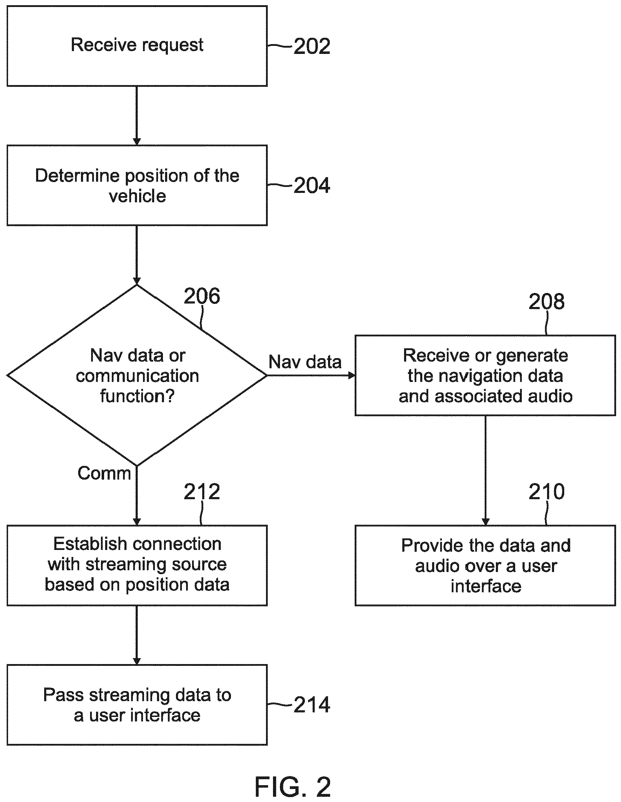

Fig. 2 is a flow chart of a method for operation of a virtualized navigation and communication radio according to one embodiment of the present invention. The method begins at block 202 when a request is received at a user interface for a specific radio function. For example, a request is received for a radio function such as receiving a request for communication over a Very High Frequency (VHF) Communication radio frequency or High Frequency (HF) Communication radio frequency. Alternatively, the request could be for a navigation radio function such as a Distance Measuring Equipment (DME), a Marker Beacon (MB), an Automatic Direction Finder (ADF), or a VHF Omni-Range (VOR) radio function.

At block 204, the method determines the position of the vehicle using an appropriate position determining system, e.g., using a Global Positioning System (GPS), Global Navigation Satellite System (GNSS), or an inertial reference system using appropriate receivers or sensors on board the vehicle. The position of the vehicle is then used by the method to synthesize the appropriate output for the requested radio function, e.g., a communication or navigation radio function.

At block 206, the process determines if the requested radio function is a navigation radio function or a communication radio function. If the requested radio function is a navigation radio function, the method proceeds to receive or generate the appropriate navigation data and associated audio for the selected radio function at block 208. In one example, as described above, when the ADF function is requested, the method generates the Morse code signal associated with the NDB. The method also uses the current position of the vehicle to determine the bearing of the vehicle.

A block 210, the process provides the data and audio over a user interface. Continuing the example, the Morse code and the bearing are presented to the user over a user interface, e.g., user interface 102 of Fig. 1.

If, at block 206, it is determined that the request relates to a communication function, the method establishes a connection with a streaming service, based on the position of the vehicle, at block 212. The communication data is then provided to the user over a user interface at block 214. For example, a connection is established over a satellite data link to an air traffic control center based on the location of the vehicle. In another example, a connection is established over a satellite data link in combination with a ground-based IP network to tune and stream communication data from non-collocated radios, such as a destination airport's control tower or airport information recording.

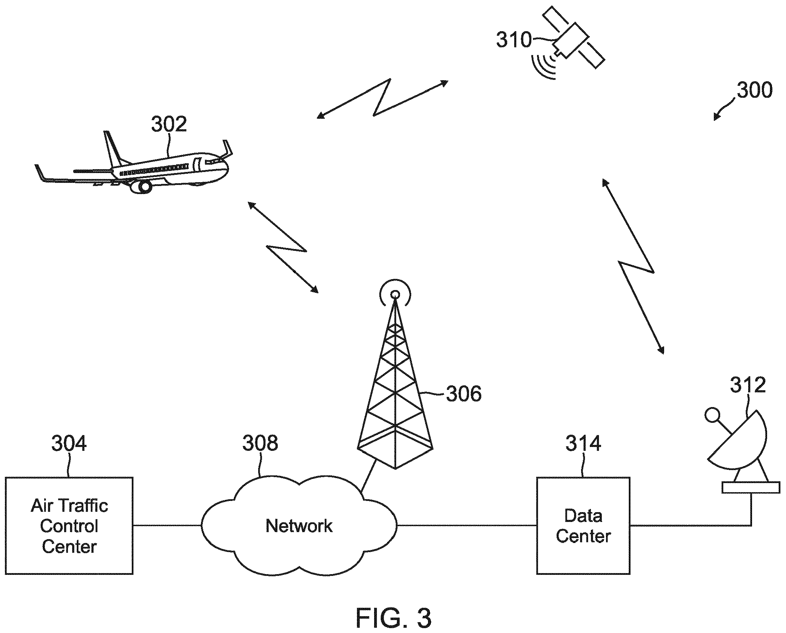

Fig. 3 is a block diagram of one embodiment of a communication system, indicated generally at 300, for a vehicle 302 with a virtualized navigation and communication radio according to one embodiment of the present invention. In one embodiment, vehicle 302 is an aircraft. Conventionally, aircraft 302 would communicate with an air traffic control center 304 over a VHF or HF communication radio channel through communication tower 306 and network 308.

When a conventional communication radio is replaced with a virtualized communication radio, such as described above with respect to Figs. 1 and 2, the communication between aircraft 302 and air traffic control center 304 is over a streaming communication channel. For example, communications from the air traffic control center 304 are directed via network 308 to a data center 314. Data center 314 converts the communication from air traffic control center 304 into an IP data stream. Alternatively, air traffic control center 304 can generate an IP data stream and transmit the IP data stream to data center 314 through network 308. Data center 314 transmits the IP data stream to aircraft 302 via a satellite communication link, e.g., using a service such as JetWave High Speed Connectivity solution from Honeywell International, Inc. or other connectivity pipe to stream the communication signal, including ground antenna 312 and satellite 310. Advantageously, many aircraft already have satellite (or terrestrial internet) systems onboard, e.g., Iridium, Iridium SBB, and GlobalXpress, which can be used to provide the satellite link portion of the communication channel between aircraft 302 and air traffic control center 304. On-board aircraft 302, the IP data stream is received and the audio is presented to the flight crew through the conventional radio interface, e.g., radio interface 102 of Fig. 1.

Similarly, communications from the aircraft 302 are initiated by the flight crew via a conventional radio interface, e.g., interface 102 of Fig. 1. An audio signal from a microphone in the conventional interface is converted to an IP data stream. The IP data stream is sent via a satellite communication link from aircraft 302 via satellite 310 and ground antenna 312 to data center 314. The IP data stream is converted to a conventional communication signal at data center 314 and provided over network 308 to air traffic control center 304 where it is provided as an audio signal to air traffic control personnel. In other implementations, the IP data stream is provided to the air traffic control center 304 as an IP data stream where it is converted to an appropriate signal format for presentation to the air traffic control personnel via a conventional interface.

### EXAMPLE EMBODIMENTS

Example 1 includes a method for virtual navigation and communication radios in a vehicle, the method comprising: receiving a request for a selected radio function; determining a position of a vehicle; determining the data to provide for the selected radio function based on the vehicle position; receiving or generating the data for the selected radio function; and providing the received or generated data over an interface associated with the navigation or communication radio.
Example 2 includes the method of example 1, wherein determining the position of the vehicle comprises determining the position of the vehicle using a Global Positioning System (GPS), Global Navigation Satellite System (GNSS), or an inertial reference system.
Example 3 includes the method of any of examples 1 and 2, wherein receiving a request for a selected radio function comprises receiving a request for communication over a Very High Frequency (VHF) Communication radio frequency or High Frequency (HF) Communication radio frequency.
Example 4 includes the method of any of examples 1-3, wherein receiving a request for a selected radio function comprises receiving a request for a Distance Measuring Equipment (DME), a Marker Beacon (MB), an Automatic Direction Finder (ADF), or a VHF Omni-Range (VOR) radio function.
Example 5 includes the method of any of examples 1-4, wherein determining the data to provide comprises selecting a frequency for the selected radio function based on the position of the vehicle.
Example 6 includes the method of any of examples 1-5, wherein receiving or generating the data comprises receiving an audio stream over a satellite data link.
Example 7 includes the method of any of examples 1-6, wherein receiving or generating the data comprises: generating audio tones or Morse code of a selected radio function providing navigation aid; or receiving an Internet Protocol (IP) audio stream associated with the selected radio function over a satellite data link.
Example 8 includes a virtualized navigation and communication radio for a vehicle, the virtualized radio comprising: a position determining system; a user interface for one or more conventional navigation and communication radios; a communication interface to a streaming communication link; at least one non-transitory data storage device having at least one database with navigation and communication data stored thereon; a processor coupled to the at least one data storage device, the processor configured to execute an application for virtualizing navigation and communication functions to perform the following: receiving a request for a selected radio function from the user interface; receiving position data from the position determining system; when navigation data is requested, receiving or generating the navigation data and associated navigation audio based on the position data and providing the navigation data over the user interface; and when a communication function is requested, establishing a connection with a streaming source with the requested communication function based on the position data and providing streamed data from the streaming source to the user interface via the communication interface.
Example 9 includes the virtualized radio of example 8, wherein the position determining system comprises a receiver for communicating with a Global Positioning System (GPS) or a Global Navigation Satellite System (GNSS), or an inertial reference system.
Example 10 includes the virtualized radio of any of examples 8 and 9, wherein the user interface comprises one or more of an interface for a Distance Measuring Equipment (DME), a Marker Beacon (MB), an automatic Direction Finder (ADF), and a VHF Omni-Range (VOR) radio.
Example 11 includes the virtualized radio of any of examples 8-10, wherein the communication interface comprises a satellite data link.
Example 12 includes the virtualized radio of any of examples 8-11, wherein receiving a request for a selected radio function comprises receiving a request for communication over a Very High Frequency (VHF) Communication radio or communication over a High Frequency (HF) Communication radio.
Example 13 includes the virtualized radio of any of examples 8-12, wherein receiving a request for a selected radio function comprises receiving a request for a Distance Measuring Equipment (DME), a Marker Beacon (MB), an Automatic Direction Finder (ADF), a VHF Omni-Range (VOR) radio function.
Example 14 includes the virtualized radio of any of examples 8-13, wherein establishing a connection with a streaming source comprises establishing a connection with a source of an audio stream over a satellite data link.
Example 15 includes the virtualized radio of any of examples 8-14, wherein establishing a connection with a streaming source comprises establishing a connection with a bi-directional audio stream over a satellite data link.
Example 16 includes the virtualized radio of any of examples 8-15, wherein receiving or generating the navigation data and associated navigation audio comprises at least one of: generating audio tones or Morse code of a selected radio function providing navigation aid; or receiving an Internet Protocol (IP) audio stream associated with the selected radio function over a satellite data link.
Example 17 includes a computer program product containing program instructions embodied on a non-transitory storage medium and configured, when executed by a processor, to virtualize navigation and communication functions, by: receiving position data from a position determining system; receiving a request for a selected radio function from a user interface; when navigation data is requested, receiving or generating the navigation data and associated navigation audio and providing the data over the user interface; and when a communication function is requested, establishing a connection with a streaming source with the requested communication function based on the position data and providing streamed data from the streaming source to the user interface via the communication interface.
Example 18 includes the computer product of example 17, wherein establishing a connection with a streaming source comprises establishing a connection with a source of an audio stream over a satellite data link.
Example 19 includes the computer product of any of examples 17 and 18, wherein establishing a connection with a streaming source comprises establishing a connection with a bi-directional audio stream over a satellite data link.
Example 20 includes the computer product of any of examples 17-19, wherein receiving or generating the navigation data and associated navigation audio comprises at least one of: generating audio tones or Morse code of a selected radio function providing navigation aid; or receiving an IP audio stream associated with the selected radio function over a satellite data link.

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the claims and the equivalents thereof.

## Claims

1. A method for virtual navigation and communication radios in a vehicle, the method comprising:
receiving a request for a selected radio function;
determining a position of a vehicle;
determining the data to provide for the selected radio function based on the vehicle position;
receiving or generating the data for the selected radio function; and
providing the received or generated data over an interface associated with the navigation or communication radio.

2. The method of claim 1, wherein determining the position of the vehicle comprises determining the position of the vehicle using a Global Positioning System (GPS), Global Navigation Satellite System (GNSS), or an inertial reference system.

3. The method of claim 1, wherein receiving a request for a selected radio function comprises receiving a request for communication over a Very High Frequency (VHF) Communication radio frequency or High Frequency (HF) Communication radio frequency.

4. The method of claim 1, wherein receiving a request for a selected radio function comprises receiving a request for a Distance Measuring Equipment (DME), a Marker Beacon (MB), an Automatic Direction Finder (ADF), or a VHF Omni-Range (VOR) radio function.

5. The method of claim 1, wherein receiving or generating the data comprises receiving an audio stream over a satellite data link.

6. The method of claim 1, wherein receiving or generating the data comprises:
generating audio tones or Morse code of a selected radio function providing navigation aid; or
receiving an Internet Protocol (IP) audio stream associated with the selected radio function over a satellite data link.

7. A virtualized navigation and communication radio for a vehicle, the virtualized radio comprising:
a position determining system;
a user interface for one or more conventional navigation and communication radios;
a communication interface to a streaming communication link;
at least one non-transitory data storage device having at least one database with navigation and communication data stored thereon;
a processor coupled to the at least one data storage device, the processor configured to execute an application for virtualizing navigation and communication functions to perform the following:
receiving a request for a selected radio function from the user interface;
receiving position data from the position determining system;
when navigation data is requested, receiving or generating the navigation data and associated navigation audio based on the position data and providing the navigation data over the user interface; and
when a communication function is requested, establishing a connection with a streaming source with the requested communication function based on the position data and providing streamed data from the streaming source to the user interface via the communication interface.

8. The virtualized radio of claim 7, wherein the communication interface comprises a satellite data link.

9. The virtualized radio of claim 8, wherein establishing a connection with a streaming source comprises establishing a connection with a source of an audio stream over a satellite data link.

10. The virtualized radio of claim 8, wherein establishing a connection with a streaming source comprises establishing a connection with a bi-directional audio stream over a satellite data link.
